# EUROPÄISCHE PATENTSCHRIFT

(11) **EP 2 966 362 B1**
(45) Veröffentlichungstag und Bekanntmachung des Hinweises auf die Patenterteilung: **25.10.2017**
(21) Anmeldenummer: 15167865.3
(22) Anmeldetag: 15.05.2015
(51) Int. Cl.: F24C 15/16

(54) **VORRICHTUNG ZUR BEWEGUNGSFÜHRUNG EINES SCHUBELEMENTS UND KÜCHENEINRICHTUNG**
DEVICE FOR GUIDING THE MOVEMENT OF A SLIDE ELEMENT AND KITCHEN APPLIANCE
DISPOSITIF DE GUIDAGE DE MOUVEMENT D'UN ÉLÉMENT DE POUSSÉE ET AGENCEMENT DE CUISINE

(30) Priorität: 07.07.2014 DE 202014103102 U
(43) Veröffentlichungstag der Anmeldung: 13.01.2016
(73) Patentinhaber: Grass GmbH, 6973 Höchst (AT)
(72) Erfinder: Lindinger, Gerlinde, 5071 Wals (AT)
(74) Vertreter: Otten, Roth, Dobler & Partner mbB Patentanwälte

(56) Entgegenhaltungen:
- WO-A1-2010/089553
- DE-A1- 19 907 812
- DE-A1-102009 034 967
- US-A1- 2001 044 992

## Beschreibung

### Stand der Technik

Im Möbelbereich wie bei Küchenmöbeln und Kücheneinrichtungen beispielsweise bei Backöfen sind Vorrichtungen zur Führung eines Schubelements, welches an Seitenwand-Abschnitten bewegbar aufgenommen ist, bekannt. Das Schubelement ist zum Beispiel ein Gargutträger bzw. Backrost oder Backblech eines Backofens, ein Ausziehboden oder eine Schublade.

In der Regel erfolgt die bewegliche Führung des Schubelements an zwei Schubelement-Seiten auf einer gemeinsamen Höhe an gegenüberliegenden vertikalen Seitenwänden des Möbels oder der Kücheneinrichtung mit zwei Führungseinheiten. Die jeweilige Führungseinheit wirkt zwischen dem Schubelement und der zugehörigen Seitenwand.

Die Führungseinheiten sind als teleskopierbare Einfach- bzw. Teilauszüge oder Vollauszüge ausgebildet. Bei Teilauszügen besteht eine Führungseinheit aus einer Trägerschiene und einer Führungsschiene, wobei die Führungsschiene dem Schubelement zugeordnet und mit diesem bewegbar ist und die Trägerschiene an dem Wandabschnitt fixierbar ist. Bei einem Vollauszug ist zusätzlich eine Mittelschiene zwischen der Trägerschiene und der Führungsschiene verschiebbar vorhanden.

Im Möbelbereich müssen Führungen der vorgenannten Art einerseits komplexen Anforderungen genügen bzw. mechanisch stabil, kompakt und zuverlässig ausgebildet sein.

Die WO 2010/089553 A1 betrifft eine Befestigungsanordnung zur Befestigung einer Gleitführung für einen Boden oder Einschub an einem Gitter einer Haushaltseinrichtung.

Die DE 199 07 812 A1 thematisiert ein Kastenmöbelstück mit einer Führungsschiene für Schubkästen, wobei ein drehbar aufgenommener Befestigungsbolzen zur Bajonettverriegelung einer Führungsschiene an einer Distanzleiste und einer vertikalen Tragleiste dient.

### Aufgabe und Vorteile der Erfindung

Aufgabe der vorliegenden Erfindung ist es, einleitend bezeichnete Vorrichtungen bzw. entsprechende Kücheneinrichtungen im Hinblick auf eine technisch und wirtschaftlich vorteilhafte Weise bereitzustellen, insbesondere im Hinblick auf eine platzsparende Anordnung und eine vorteilhafte Montage zum Beispiel bei Backöfen.

Diese Aufgabe wird durch die unabhängigen Ansprüche gelöst.

Die abhängigen Ansprüche betreffen vorteilhafte Varianten der Erfindung.

Die Erfindung geht aus von einer Vorrichtung zur Bewegungsführung eines Schubelements, insbesondere von einer Backrohrauszugs-Vorrichtung zur Bewegungsführung eines Gargutträgers eines Backrohres, wobei das Schubelement mittels der Vorrichtung an einem Seitenwand-Abschnitt anordenbar ist, und wobei die Vorrichtung eine dem Seitenwand-Abschnitt zuordenbare Trägerschiene und eine mit dem Schubelement verbindbare Auszugschiene umfasst, welche relativ zur Trägerschiene verschieblich ist, und wobei die Trägerschiene einen in Längserstreckung der Vorrichtung verlaufenden Längsschenkel aufweist. Die erfindungsgemäße Vorrichtung kann als Einfach- bzw. Teilauszug oder als Vollauszug mit einer Mittelschiene zwischen der Trägerschiene und der Auszugschiene ausgebildet sein, wobei die Vorrichtung

Verbindungsmittel zur Anbringung der Vorrichtung an einer Profilanordnung des Seitenwand-Abschnitts aufweist, wobei die Verbindungsmittel Lagermittel zur hintergreifenden Montage an der Profilanordnung umfassen, und die Lagermittel an einer im montierten Zustand zum Seitenwand-Abschnitt zeigenden Außenseite des Längsschenkels vorhanden sind, wobei die Verbindungsmittel ein drehbar an dem Längsschenkel aufgenommenes Lagerelement umfassen. Der montierte Zustand ist der montierte Zustand der Vorrichtung am Seitenwand-Abschnitt bzw. an der Profilanordnung. Die Hintergreifung mit den Lagermitteln betrifft insbesondere eine Bewegung zur Anbringung der Vorrichtung bei der Montage, mit welcher die Vorrichtung senkrecht zum Seitenwand-Abschnitt bzw. zur Profilanordnung herangeführt wird. Auf dem letzten Teilweg des Heranführens findet das hintergreifende Zusammenwirken der Lagermittel an der Profilanordnung statt, wobei eine gewisse Kraft aufzubringen ist, um Abschnitte an den Lagermitteln und/oder der Profilanordnung einzuschieben oder kurzzeitig elastisch zu verformen. Im montierten Zustand ist die elastische Verformung wieder vollständig oder im Wesentlichen rückgestellt.

Der Kern der Erfindung liegt darin, dass die Verbindungsmittel mindestens zwei Lagerelemente und zwei beabstandete und auf die Lagerelemente abgestimmt gestaltete Profilelemente umfassen, zwischen denen die Lagerelemente einsetzbar sind. Die Profilelemente sind insbesondere runde oder eckige Stabelemente. Die Profilelemente können insbesondere Bestandteil von handelsüblichen Seitengittern von Backöfen sein. Insbesondere sind genau zwei drehbar gelagerte Lagerrollen vorhanden. Die Lagerrollen sind insbesondere identisch ausgestaltet. Mit der Drehbarkeit der Lagerrollen ist eine Abrollbewegung der Lagerrollen und damit eine Relativbewegung der Trägerschiene gegenüber dem Seitenwandabschnitt vorteilhaft wahlweise bzw. falls gewünscht realisierbar. Auch kann bei einem Einfachauszug ohne Mittelschiene eine gegenüber einem Einfachauszug mit an der Seitenwand feststehender Trägerschiene eine Ausfahrweite bzw. eine Ausfahrstrecke des Schubelements relativ zu den Seitenwänden erhöhet werden, und zwar um die Strecke, welche die Trägerschiene mittels der drehbaren Lagerrollen gegenüber der Seitenwand ausfahrbar ist. Beim Ausfahren der Trägerschiene samt daran vorhandener Auszugschien rollen die Lagerrollen an einem unteren Profilabschnitt der Profilanaordnung ab, wohingegen ein geringes Spiel der Lagerrollen zu einem oberen Profilabschnitt der Profilanordnung, der dem unteren Profilabschnitt vertikal gegenüberliegt, verbleibt. Trotzdem kann eine Haltefunktion der Lagerrollen mit einer Hintergreifung bzw. einem Hinterschnitt am oberen Profilabschnitt eingerichtet sein, da das Spiel der Lagerrollen zum oberen Profilabschnitt sehr gering bzw. ggf. nur im Bruchteil eines Millimeters liegt.

Die Lagermittel und die Profilanordnung sind aufeinander so abgestimmt, dass im montierten Zustand der Vorrichtung Lagerkräfte zur dauerhaften stabilen Lagerung der Vorrichtung an dem Seitenwand-Abschnitt wirksam sind.

Mit der Hinterschnitt-Verbindung der Vorrichtung an der Seitenwand wird das Gewicht der Vorrichtung mit dem daran anbringbaren Schubelement aufgenommen und eine insbesondere beidseitig Lagerung des Schubelements mit jeweils einer erfindungsgemäßen Vorrichtung an beiden Seiten des Schubelements realisiert, wobei je eine Vorrichtung zwischen einer Seite des Schubelements und jeweils einer von zwei gegenüberliegenden Seitenwand-Abschnitten wirkt.

Die Profilanordnung kann der Seitenwand zugehörig sein, oder als separates Teil zum Beispiel nachträglich daran vorgesehen werden. Die Profilanordnung ist gemäß dem ersten Fall zum Beispiel an dem betreffenden Teil der Seitenwand fest bzw. integral daran ausgebildet, insbesondere vorstehend zu einer flächigen Innenseite des Seitenwand-Abschnitts. Vorteilhaft ist die Profilanordnung als separate Einheit vorhanden, zum Beispiel bei Backöfen als lösbar an jeweiligen gegenüberliegenden Seitenwand-Abschnitten aufsteckbare Seitengitter bzw. Seitenwand-Gitter mit jeweils mehreren übereinander liegenden horizontal verlaufenden Profilelementen. Dies ist insbesondere bei Backöfen realisiert, um in der Backmuffe mehrere Backbleche vertikal beabstandet übereinander unterzubringen.

Insbesondere bei Backöfen sind innen an beiden Seitenwänden standardmäßig bzw. handelsübliche Seitengitter vorhanden, welche die Profilanordnung bereitstellen.

Um auch bei Backöfen, bei denen mit den Seitengittern lediglich ein Herausziehen mit einem manuellen Abstützen eines vorderen Randes des Gargutträgers möglich ist, was umständlich ist und eine Verbrennungsgefahr für den Nutzer mit sich bringt, ist die erfindungsgemäßen Vorrichtung vorteilhaft nutzbar. Mit der Erfindung wird über den gesamten Ausziehweg des Schubelements eine abgestützte Führung des Gargutträgers möglich.

Die erfindungsgemäße Vorrichtung ist beispielsweise effektiv zur späteren Nachrüstung von Backöfen verwendbar, die nur statisch wirkende Seitengitter aufweisen. Damit lassen sich teleskopierbare Schiebeführungen als Teil- oder Vollauszug für z. B. Backbleche bzw. Gargutträger einfach und stabil anbringen.

Die Profilanordnung ist beispielsweise zu einer Flächenseite des Seitenwand-Abschnitts vorstehend ausgebildet, insbesondere mit vertikal beabstandeten gegenüberliegenden schlanken Profilen, die sich längs in der Tiefe des Seitenwand-Abschnitts insbesondere parallel erstrecken. Die Profilabschnitte der Profilanordnung können zum Beispiel stab- oder schienenförmig sein. Die Profilanordnung ist insbesondere als Stab- oder Gitterstruktur gebildet, wie dies bei handelsüblichen Seitengittern in einem Nutzvolumen eines Backofens der Fall ist.

Alternativ kann die Profilanordnung nicht vorstehend an dem Seitenwand-Abschnitt vorgesehen sein, zum Beispiel mit Stegen oder Nuten, die in oder an der Seitenwand ausgebildet sind.

Die Profilanordnung weist in der Regel vertikal beabstandete gegenüberliegende Profilbereich auf, zwischen welche die Lagermittel hintergreifend anbringbar sind.

Die Lagermittel der Vorrichtung sind bevorzugt an einem im Nutzzustand vertikal ausgerichteten Abschnitt wie einem Längsschenkel der Trägerschiene angeformt oder unverlierbar daran fixiert. Insbesondere sind die Lagermittel keine Schraubmittel oder Einsteckzapfen, welche in Löcher der Seitenwand einschraubbar bzw. einsteckbar sind. Die Trägerschiene ist insbesondere als einfach oder mehrfach umgebogenes Blechteil ausgestaltet, im einfachen Fall als Winkelblech mit rechtwinkligen Umbiegungen wie zum Beispiel eine Profilschiene, die im Schnitt L- oder U-förmig ist.

Vorteilhafterweise weisen die Verbindungsmittel in Längsrichtung der Vorrichtung voneinander beabstandete Lagerelemente auf, welche zwischen gegenüberliegenden Profilabschnitten der Profilanordnung einsetzbar sind, um die Vorrichtung an der Profilanordnung anzubringen. Die den Lagermitteln zugehörigen insbesondere untereinander identischen Lagerelemente dienen der Ausbildung einer lösbaren Verbindung zwischen der Vorrichtung und dem Seitenwand-Abschnitt. Mit dem Abstand der wenigstens zwei Lagerelemente insbesondere mit einem Abstand in etwa gemäß der Länge der Trägerschiene, mit welcher ein Teil einer Tiefe des Seitenwand-Abschnitts überbrückbar ist, wird eine Mehrpunktlagerung bzw. eine mechanisch stabile Lagerung der Vorrichtung am Seitenwand-Abschnitt erreicht. Die Anbringung der Vorrichtung in einem materialfreien Bereich zwischen insbesondere vertikal beabstandeten gegenüberliegenden Profilabschnitten ist damit vorteilhaft möglich.

Es ist überdies vorteilhaft, dass die Verbindungsmittel insbesondere genau zwei Lagerrollen umfassen. Mit zwei Lagerelementen kann die Anbindung und Lagerung der Vorrichtung materialsparend und mechanisch ausreichend fest realisiert werden. Lagerrollen sind vorteilhaft als Klemm- oder Rollelemente verwendbar.

Auch ist es vorteilhaft, dass ein Lagerelement in einem in Längsrichtung der Trägerschiene betrachteten vorderen und/oder in einem hinteren Endbereich des Längsschenkels positioniert ist. Insbesondere sind zumindest zwei identische Lagerelemente vorhanden, von denen ein Lagerelement in einem vorderen Endbereich des Längsschenkels und ein Lagerelement in einem hinteren Bereich der Längsschenkel positioniert ist, insbesondere auf gleicher Höhe an dem Längsschenkel.

Es ist auch von Vorteil, dass ein Lagerelement in einem in Längsrichtung der Trägerschiene betrachteten mittleren Bereich des Längsschenkels positioniert ist. Damit kann z. B. eine Bewegung der Trägerschiene relativ zur Profilanordnung eingerichtet werden.

Eine weitere vorteilhafte Ausgestaltung des Erfindungsgegenstandes zeichnet sich dadurch aus, dass die Verbindungsmittel zwei beabstandete Profilelemente aufweisen, die für eine lösbare Anordnung an der Profilanordnung abgestimmt sind. Insbesondere weisen die Elemente parallel nebeneinander verlaufende Profilelemente auf. Die Profilelemente können insbesondere als ein Bauteil gestaltet sein, das an einem handelsüblichen Seitengitter von Backöfen zusätzliche anbringbar ist. Die Profilelemente sind insbesondere abgestimmt für eine passende Einsetzung an einem handelsüblichen Seitengitter des Backofens. Die Profilelemente können daher vorteilhaft auch für eine Nachrüstung von Backöfen mit handelsüblichen Seitengittern benutzt werden. Damit wird eine Anordnung des Seitenwand-Abschnitts passend ergänzt für die hintergreifende Montage der Lagermittel bzw. der Vorrichtung an dem Seitenwand-Abschnitt mit dem Seitengitter.

Auch ist es vorteilhaft, dass ein Abstand zwischen zwei Profilelementen und ein Höhenmaß der Lagerelemente aufeinander abgestimmt sind. Die Lagerelemente können mit dem im Anbringzustand wirkenden vertikalen Höhenmaß festhaltend mit hintergreifender Anbringung im vertikalen Abstand der Profilelemente befestigt werden. Das Höhenmaß ist zum Beispiel ein Durchmessermaß der scheibenförmigen bzw. rollenartigen Lagerelemente.

Weiter ist es von Vorteil, dass die Lagerelemente und die zwei beabstandeten Profilelemente derart abgestimmt sind, dass die Lagerelemente gleitend und/oder abrollend in Längserstreckung der Profilelemente relativ zu den Profilelementen bewegbar sind. Die Richtung der Längserstreckung der Profilelemente entspricht der Ein- und Ausfahrrichtung des mit der Vorrichtung bereitgestellten horizontalen Bewegungsweges des Schubelements. Damit kann die Trägerschiene relativ zum feststehenden Seitenwandabschnitt heraus- und wieder in einen freien Innenbereich des Möbels oder des Backofens eingefahren werden, womit die maximal mögliche Ausfahrweite des Schubelements erhöht werden kann. Somit ist das Schubelement im vollständig ausgefahrenen Zustand für einen Nutzer ungehindert durch angrenzende Bereiche des Möbels oder des Backofens allseitig zugänglich. Vorteilhaft kann zum Beispiel eine heiße Backform von einem aus dem Backofen ausgefahrenen Gargutträger abgehoben bzw. wieder aufgesetzt werden, wohingegen ansonsten bei nur teilweise aus dem Backofen-Inneren ausfahrbarem Gargutträger die Gefahr von Verbrennungen des Nutzers durch Kontakt am heißen Gargutträger bzw. Wandungen der Backmuffel erhöht ist.

Vorteilhafterweise weisen die Verbindungsmittel zwei beabstandete Profilelemente auf, welche einen Einlaufbereich für ein erleichtertes stirnseitiges Einschieben der an der Trägerschiene angebrachten Lagerelemente zwischen die Profilelemente bereitstellen. Dadurch ist eine erleichterte Montage der Vorrichtung möglich.

Vorteilhafterweise weisen die Verbindungsmittel eine Anschlaganordnung für einen mechanischen Anschlag eines Lagerelements an einem der Profilelemente auf. Insbesondere wird hiermit ein Anschlag an einer definierten Stelle für eine Bewegung in Längsrichtung der Profilelemente bereitgestellt, wenn die Trägerschiene in Bewegungsrichtung des Schubelements eine maximale Ausfahrstellung erreicht.

Die Erfindung betrifft außerdem eine Kücheneinrichtung mit einem Nutzvolumen, welches von gegenüberliegenden Seitenwand-Abschnitten begrenzt ist, mit einer Vorrichtung nach einem der oben genannten Ausbildungen.

Beispielsweise kann die Kücheneinrichtung ein Backofen oder ein Kühlschrank sein.

Insbesondere sind die Seitenwand-Abschnitte gegenüberliegende vertikale Seiten eines hohlen und beheizbaren Nutzvolumens eines Backofens.

Damit lassen sich die diskutierten Vorteile bei der entsprechenden Kücheneinrichtung realisieren.

### Figurenbeschreibung

Weitere Merkmale und Vorteile der Erfindung sind anhand einer schematisiert dargestellten erfindungsgemäßen Bewegungsführungs-Vorrichtung näher erläutert.

Im Einzelnen zeigt:
- Figur 1: eine schematisierte erfindungsgemäße Bewegungsführungs-Vorrichtung, die an einer Profilanordnung angebracht ist, in perspektivischer Ansicht,
- Figur 2: die Anordnung gemäß Figur 1 von der Seite,
- Figur 3: einen hinteren perspektivisch dargestellten Endabschnitt der Anordnung gemäß Figur 1 und 2,
- Figur 4: eine Frontansicht auf das rückwärtige Ende der in Figur 3 dargestellten Anordnung.

In den Figuren ist eine an einer Profilanordnung angeordnete erfindungsgemäße Bewegungsführungs-Vorrichtung 1 dargestellt, wobei die Profilanordnung an einer nicht gezeigten ersten Seitenwand eines Backrohres mit einem Nutzvolumen eines dazugehörigen Backofens lösbar aber fest anbringbar ist.

Die Bewegungsführungs-Vorrichtung 1 dient zur beweglichen horizontalen Bewegungsführung eines Gargutträgers (nicht dargestellt) mit einer horizontalen Auflageebene für Gargut bzw. für zu erhitzendes Gut, wobei der Gargutträger, z. B. als flache Auflagewanne, Backblech oder als Auflagegitter ausgestaltet sein kann. Der Gargutträger ist über zwei auf einer Höhe gegenüberliegende erfindungsgemäße Bewegungsführungs-Vorrichtungen in dem Backrohr des dazugehörigen Backofens einfahrbar und ausfahrbar. Bei vollständig eingefahrenem Gargutträger ist das Gargut auf dem Gargutträger bei geschlossener Fronttür des Backofens erhitzbar.

Zur Schiebeführung in Ausschieberichtung P1 und in Einschieberichtung P2 ist eine weitere nicht gezeigte erfindungsgemäße Bewegungsführungs-Vorrichtung 1 an dem Gargutträger wirksam. Die weitere Bewegungsführungs-Vorrichtung ist über eine entsprechende Profilanordnung an einer weiteren bzw. zweiten Seitenwand, die der ersten Seitenwand parallel gegenüberliegt, aufgenommen.

Die Bewegungsführungs-Vorrichtung 1 umfasst eine einem Seitenwand-Abschnitt der ersten Seitenwand zuordenbare Trägerschiene 2 und eine an der Trägerschiene 2 über nicht näher dargestellte Lagermittel teleskopartig bewegbare bzw. verschieblich verbundene Auszugschiene 3. Die Auszugschiene 3 dient zur lösbaren Verbindung mit dem zum Beispiel auf der Auszugschiene 3 auflegbaren Gargutträger und ist mit diesem gemeinsam in Richtung P1 bzw. P2 verschiebbar.

In den Figuren ist die Auszugschiene 3, je nachdem wie mechanische Anschläge vorhanden sind in Richtung P2 ganz oder teilweise eingefahren relativ zur am Seitenwand-Abschnitt fixierten Zustand der Trägerschiene 2 dargestellt, wobei ein vorderes Teilstück der Auszugschiene 3 über das vordere Ende der Trägerschiene 2 übersteht und die hinteren Enden der beiden Schienen 2, 3 nur wenig in Längsrichtung zueinander versetzt sind.

Die aus einem mehrfach umgebogenen Blechmaterial gebildete Trägerschiene 2 ist im Querschnitt U-förmig und umfasst einen höheren äußeren vertikalen Schenkel 14, einen inneren vertikalen Schenkel 16 und einen dazwischen vorhandenen horizontal ausgerichteten Boden 15. Am Schenkel 16 greift die Auszugschiene 3 an.

An der Trägerschiene 2 sind Verbindungsmitteln zugehörige Lagerelemente vorhanden, welche als vordere Rolle 4 und als hintere Rolle 5 ausgebildet sind. Die Rollen 4, 5 sind auf einer gemeinsamen Höhe an einer Außenseite 14a des Schenkels 14 vorstehend in einem in Längsrichtung der Trägerschiene 2 vorderen Endabschnitt und einem hintere Endabschnitt vorhanden. Die Rollen 4, 5 sind identisch gestaltet und weisen eine konkav geformte umfänglich verlaufende Umfangsbahn 4a bzw. 5a auf. Die Rollen 4, 5 können feststehend oder drehbar an dem Schenkel 14 gelagert sein.

Zur Anordnung der Bewegungsführungs-Vorrichtung 1 an dem Seitenwand-Abschnitt umfasst die Profilanordnung eine gestellartige Gitteranordnung 6, welche innenseitig an dem dazugehörigen Seitenwand-Abschnitt lösbar fixierbar ist, zum Beispiel mit Einsteckabschnitten der Profilanordnung, welche in passend vorbereitete Vertiefungen bzw. Öffnungen im Seitenwand-Abschnitt einsteckbar und fixierbar zum Beispiel verrastbar sind.

Die Gitteranordnung 6 umfasst miteinander verbundene gerade oder schräge bzw. teils endseitig umgebogene gebogene Stäbe zum Beispiel aus metallischem Mehrkant- oder Rundmaterial.

Demgemäß weist die Gitteranordnung 6 einen vorderen vertikalen Stab 7 und einen hinteren vertikalen Stab 8 auf, die in etwa entsprechend der Länge der Trägerschiene 2 horizontal beabstandet sind. Horizontal zwischen den vertikalen Stäben 7, 8, daran fest fixiert, verlaufen ein unterer Längsstab 9, ein mittlerer Längsstab 10 und ein oberer Längsstab 11, die jeweils bügelförmig bzw. U-förmig sind. Die Längsstäbe 9 bis 11 weisen damit jeweils am Ende kurze rechtwinklig umgebogene Endabschnitte auf, über welche die Längsstäbe 9 bis 11 jeweils am vorderen Stab 7 und am hinteren Stab 8 verbunden zum Beispiel angeschweißt sind. Die identischen Längsstäbe 9 und 10 sind mit ihren parallel zur Länge der Trägerschiene 2 verlaufenden Mittelteilen etwas weiter horizontal beabstandet von den vertikalen Stäben 7, 8 als der obere Längsstab 11. Dadurch ist der obere Längsstab 11 ausreichend weit entfernt von dem an der Auszugschiene 3 oberhalb anbringbaren Gargutträger (nicht dargestellt).

Des Weiteren ist zur festen Lagerung bzw. Aufnahme der Rollen 4, 5 und damit der Bewegungsführungs-Vorrichtung 1 eine als bügelförmige Rollenaufnahme 17 ausgebildete Lagerelement-Aufnahme mit einem oberen Stababschnitt 12 und einem unteren Stababschnitt 13 an der Gitteranordnung 6 vorhanden. Die Rollenaufnahme 17 ist zwischen den umgebogenen Enden der Längsstäbe 10 und 11 entweder fest fixiert vorhanden oder daran fest aber lösbar angesteckt bzw. eingerastet angebracht, was auch eine nachträgliche Anbringung der Rollenaufnahme 17 an den Längsstäben 10 und 11 bzw. die Demontage der Rollenaufnahme 17 ermöglicht.

Die Stababschnitte 12 und 13 sind zusammenhängend bzw. einteilig aus einem umgebogenen Rundmaterial, insbesondere entsprechend der Materialausgestaltung der Längsstäbe 10, 11. Über die wesentliche Länge bzw. zwischen den Längsstäben 10, 11 sind die Stababschnitte 12 und 13 geradlinig und parallel zueinander und zu den Mittelteilen der Längsstäbe 10, 11 ausgerichtet.

In einem materialfreien Zwischenraum zwischen den parallelen Teillängen der Stababschnitte 12 und 13, sind die beiden Rollen 4, 5 zwar lösbar anbringbar aber fest gelagert aufgenommen bzw. gehalten. Für eine erleichterte Montage der Bewegungsführungs-Vorrichtung 1 wird die Bewegungsführungs-Vorrichtung 1 bzw. die beiden Rollen bevorzugt an der Gitteranordnung 6 mit der Rollenaufnahme 17 angebracht, wenn die Gitteranordnung 6 von der Seitenwand abgenommen ist. Anschließend wird die Gitteranordnung 6 mit der daran festgelegten Bewegungsführungs-Vorrichtung 1, wie in den Figuren gezeigt, an dem Seitenwand-Abschnitt fest angebracht bzw. angesteckt.

Die Rollen 4, 5 sind zur insbesondere klemmenden Anbringung zwischen den Stababschnitten 12 und 13 in Größe und Gestalt auf die Stababschnitte 12 und 13 bzw. auf deren vertikalen Abstand zueinander abgestimmt ausgestaltet. Insbesondere ist die Form der Umfangsbahnen 4a und 5a, die insbes. identisch sind, auf die Außenform der Stababschnitten 12 und 13 abgestimmt.

Die Rollen 4, 5 oder andere Lagerelemente können alternativ auch zwischen den Längsstäben 9 und 10 hintergreifend eingebracht sein. Hierzu muss bei Verwendung von Rollen der Rollendurchmesser bzw. der Durchmesser der Umfangsbahnen 4a, 5a passend auf den vertikalen Abstand zwischen den Längsstäben 9, 10 abgestimmt sein. Damit kann auf die Rollenaufnahme 17 verzichtet werden, wobei ggf. Anschläge vorne und hinten an den Längsstäben 9, 10 nötig sind.

Im gezeigten Ausführungsbeispiel sind die Umfangsbahnen 4a und 5a mit ihrer konkaven Form an den Radius der zylindrischen Stababschnitte 12 und 13 angepasst. Die Rollen 4, 5 sind im in den Figuren gezeigten montierten Zustand der Bewegungsführungs-Vorrichtung 1 mit den Umfangsbahnen 4a, 5a jeweils klemmend zwischen den Stababschnitten 12, 13 festgehalten.

Die Rollenaufnahme 17 ist vorne mit einer halbkreisförmigen Umbiegung versehen, durch welche die horizontalen Mittelabschnitte der Längsstäbe 12 und 13 miteinander verbunden sind. Die vordere Rolle 4 ist zwischen den Längsstäben 12 und 13 an der Umbiegung anschmiegend eingeklemmt gehalten und zusätzlich gegen eine Bewegung der Trägerschiene 2 in Richtung P1 gesichert, was beim Ausziehen des Gargutträgers in Richtung P1 vorteilhaft ist.

Die Rollenaufnahme 17 weist am hinteren Ende eine Einschiebehilfe 18 auf, wonach die Stababschnitte 12, 13 an ihrem hinteren Ende jeweils schräg bzw. gemeinsam aufweitend ausgebildet sind. Der obere Stababschnitt 12 weist einen hinteren Abschnitt 12a auf, der zum horizontalen Mittelteil des Stababschnitts 12 nach oben abgewinkelt ist und der untere Stababschnitt 13 weist einen hinteren Abschnitt 13a auf, der zum horizontalen Mittelteil des Stababschnitts 13 nach unten abgewinkelt ist. Die Abwinkelung ist jeweils insbesondere gleichartig und beträgt zum Beispiel ca. 20 Winkelgrade jeweils zur Horizontalen. Damit kann die Bewegungsführungs-Vorrichtung 1 bzw. können die Rollen 4 und 5 im hinteren Bereich mit der Rolle 4 voraus zwischen die aufgeweiteten Bereiche der Einschiebehilfe 18 eingefädelt und anschließend zwischen die geraden Mittelabschnitte der Stababschnitte 12, 13 in Richtung P1 klemmend eingeschoben werden.

Die Rollen 4, 5 können gegebenenfalls alternativ durch seitliches Heranführen der Bewegungsführungs-Vorrichtung 1 bzw. mit den Rollen 4, 5 voran zwischen die beiden Stababschnitte 12 und 13 eingeklemmt befestigt werden, beispielsweise indem die Bewegungsführungs-Vorrichtung 1 mit dem Schenkel 14 etwas verkippt ausgerichtet wird bzw. schräg zur in den Figuren gezeigten Ausrichtung relativ zur Gitteranordnung 6 gebracht wird, so dass die Rollen 4, 5 zwischen die Stababschnitte 12 und 13 einclipsbar ist. Hierzu wird die Bewegungsführungs-Vorrichtung 1 aus der schrägen Ausrichtung in die in den Figuren gezeigte aufrechte Ausrichtung gebracht.

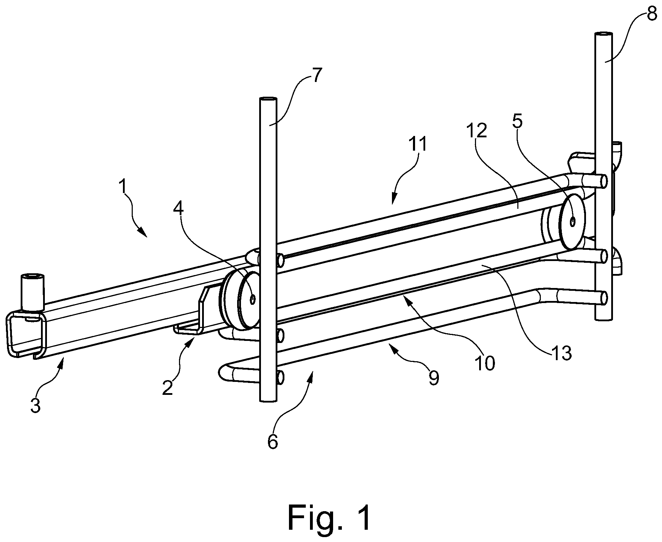

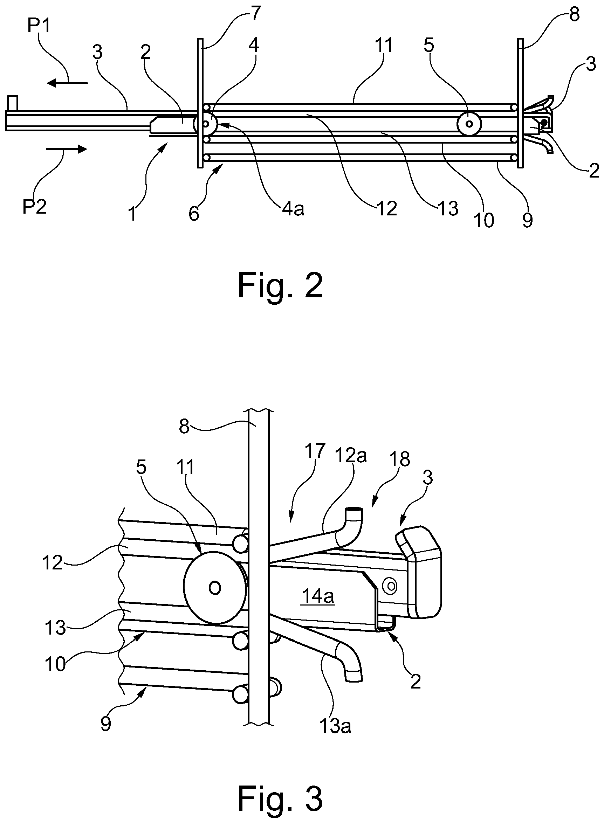

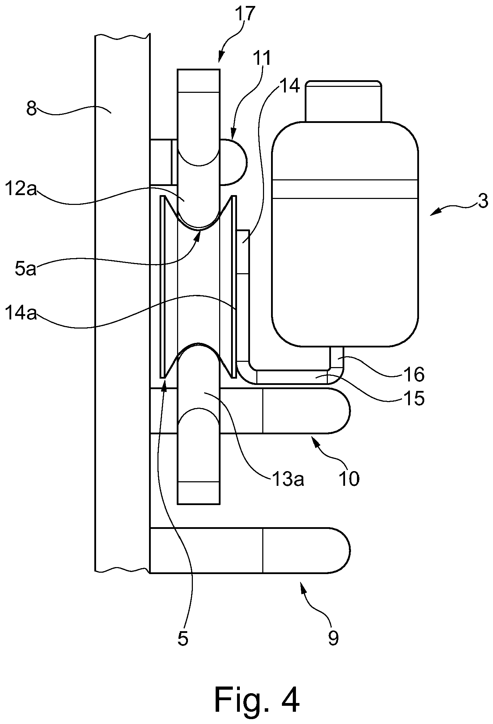

Statt der Rollen 4 und 5 können auch andere aber grundsätzlich mit den Rollen 4, 5 gleichwirkende Lagerelemente verwendet werden. Auch sind andere bzw. anders dimensionierte Rollen verwendbar, welche so auf die Stababschnitte 12 und 13 bzw. deren vertikalen Abstand abgestimmt sind, beispielsweise mit einem Durchmesser eines Bahngrundes der Umfangsbahnen, welcher etwas kleiner ist als der vertikale Abstand zwischen den Stababschnitten 12 und 13. Damit können die unten auf dem Stababschnitt 13 aufliegenden Rollen rollend auf dem unteren Stababschnitt 13 verschieblich sein. Wird die zur hinteren Rolle weitere Rolle nicht vorne sondern nach hinten versetzt, etwa in der Mitte der Gesamtlänge der Trägerschiene 2 positioniert, ist mit der Trägerschiene 2 ein entsprechender Ausfahrweg in Richtung P1 und zurück in Richtung P2 realisierbar, womit die Auszugschiene 3 und damit der Gargutträger, verglichen mit der Anordnung gemäß der Figuren 1 bis 4 mit der positionsfesten Trägerschiene weiter aus dem Backrohr herausgezogen werden kann, was bedienerfreundlich ist. Das Herausziehen der Trägerschiene 2 erfolgt maximal bis zum Anschlag der mittleren Rolle an der vorderen Umbiegung der Stababschnitte 12, 13. Nach hinten muss ggf. außerdem ein mechanischer Anschlag zur Begrenzung der Einschiebebewegung der Trägerschiene 2 relativ zu Rollenaufnahme 17 bzw. zur Vorgabe eines maximalen Einschiebeweges vorgesehen werden.

Grundsätzlich können an der Bewegungsführungs-Vorrichtung 1 verschiedene Größen und/oder Formen von Lagerelementen bzw. Rollen 4, 5 für den jeweiligen existierenden vertikale Abstand der Stababschnitte 12, 13 gewählt werden.

### Bezugszeichenliste:

- 1: Bewegungsführungs-Vorrichtung
- 2: Trägerschiene
- 3: Auszugschiene
- 4: Rolle
- 4a: Umfangsbahn
- 5: Rolle
- 5a: Umfangsbahn
- 6: Gitteranordnung
- 7: Stab
- 8: Stab
- 9: Längsstab
- 10: Längsstab
- 11: Längsstab
- 12: Stababschnitt
- 12a: Abschnitt
- 13: Stababschnitt
- 13a: Abschnitt
- 14: Schenkel
- 14a: Außenseite
- 15: Boden
- 16: Schenkel
- 17: Rollenaufnahme
- 18: Einschiebehilfe

## Patentansprüche

1. Vorrichtung (1) zur Bewegungsführung eines Schubelements, das mittels der Vorrichtung (1) an einem Seitenwand-Abschnitt anordenbar ist, wobei die Vorrichtung (1) eine dem Seitenwand-Abschnitt zuordenbare Trägerschiene (2) und eine mit dem Schubelement verbindbare Auszugschiene (3) umfasst, welche relativ zur Trägerschiene (2) verschieblich ist, und wobei die Trägerschiene (2) einen in Längserstreckung der Vorrichtung (1) verlaufenden Längsschenkel (14) aufweist, wobei die Vorrichtung (1) Verbindungsmittel zur Anbringung der Vorrichtung (1) an einer Profilanordnung des Seitenwand-Abschnitts aufweist, wobei die Verbindungsmittel Lagermittel zur hintergreifenden Montage an der Profilanordnung umfassen, und die Lagermittel an einer im montierten Zustand zum Seitenwand-Abschnitt zeigenden Außenseite (14a) des Längsschenkels (14) vorhanden sind, wobei die Verbindungsmittel ein drehbar an dem Längsschenkel (14) aufgenommenes Lagerelement umfassen, **dadurch gekennzeichnet, dass** die Verbindungsmittel mindestens zwei Lagerelemente und zwei beabstandete und auf die Lagerelemente abgestimmt gestaltete Profilelemente (12, 13) umfassen, zwischen denen die Lagerelemente einsetzbar sind.

2. Vorrichtung nach Anspruch 1, **dadurch gekennzeichnet, dass** die Verbindungsmittel in Längsrichtung der Vorrichtung (1) voneinander beabstandete Lagerelemente aufweisen, welche zwischen gegenüberliegenden Profilabschnitten (10, 11) der Profilanordnung einsetzbar sind, um die Vorrichtung (1) an der Profilanordnung anzubringen.

3. Vorrichtung nach Anspruch 1 oder Anspruch 2, **dadurch gekennzeichnet, dass** die Verbindungsmittel genau zwei Lagerrollen (4, 5) umfassen.

4. Vorrichtung nach einem der vorhergehenden Ansprüche, **dadurch gekennzeichnet, dass** ein Lagerelement in einem in Längsrichtung der Trägerschiene (2) betrachteten vorderen und/oder in einem hinteren Endbereich des Längsschenkels (14) positioniert ist.

5. Vorrichtung nach einem der vorhergehenden Ansprüche, **dadurch gekennzeichnet, dass** ein Lagerelement in einem in Längsrichtung der Trägerschiene (2) betrachteten mittleren Bereich des Längsschenkels (14) positioniert ist.

6. Vorrichtung nach einem der vorhergehenden Ansprüche, **dadurch gekennzeichnet, dass** die Verbindungsmittel zwei beabstandete Profilelemente (12, 13) aufweisen, die für eine lösbare Anordnung an der Profilanordnung abgestimmt sind.

7. Vorrichtung nach einem der vorhergehenden Ansprüche, **dadurch gekennzeichnet, dass** ein Abstand zwischen zwei Profilelementen (12, 13) und ein Höhenmaß der Lagerelemente aufeinander abgestimmt sind.

8. Vorrichtung nach einem der vorhergehenden Ansprüche, **dadurch gekennzeichnet, dass** die Lagerelemente und die zwei beabstandeten Profilelemente (12, 13) derart abgestimmt sind, dass die Lagerelemente gleitend und/oder abrollend in Längserstreckung der Profilelemente (12, 13) relativ zu den Profilelementen (12, 13) bewegbar sind.

9. Vorrichtung nach einem der vorhergehenden Ansprüche, **dadurch gekennzeichnet, dass** die Verbindungsmittel zwei beabstandete Profilelemente (12, 13) aufweisen, welche einen Einlaufbereich (12a, 13a) für ein erleichtertes stirnseitiges Einschieben der an der Trägerschiene (2) angebrachten Lagerelemente zwischen die Profilelemente (12, 13) bereitstellen.

10. Vorrichtung nach einem der vorhergehenden Ansprüche, **dadurch gekennzeichnet, dass** die Verbindungsmittel eine Anschlaganordnung für einen mechanischen Anschlag eines Lagerelements an einem der Profilelemente (12, 13) aufweisen.

11. Kücheneinrichtung mit einem Nutzvolumen, welches von gegenüberliegenden Seitenwand-Abschnitten begrenzt ist, mit einer Vorrichtung (1) nach einem der vorhergehenden Ansprüche.

## Claims

1. Device (1) for guiding the movement of a sliding element which can be arranged on a side wall section by means of the device (1), wherein the device (1) comprises a carrier rail (2) which can be assigned to the side wall section and a pull-out rail (3) which is connectable to the sliding element and is displaceable relative to the carrier rail (2), and wherein the carrier rail (2) comprises a longitudinal leg (14) which extends in a longitudinal extension direction of the device (1), wherein the device (1) comprises connecting means for attaching the device (1) onto a profile arrangement of the side wall section, wherein the connecting means include bearing means for mounting on the profile arrangement by means of engaging behind, and the bearing means are present on an outside surface (14a) of the longitudinal leg (14) which points to the side wall section in the mounted state, wherein the connecting means comprise a bearing element mounted rotatably on the longitudinal leg (14), **characterised in that** the connecting means comprise at least two bearing elements and two profile elements (12, 13) which are spaced apart from one another and adjusted to the bearing elements between which the bearing elements can be inserted.

2. Device according to claim 1, **characterised in that** the connecting means in a longitudinal direction of the device (1) comprise spaced apart bearing elements which can be inserted between opposite profile sections (10, 11) of the profile arrangement in order to attach the device (1) to the profile arrangement.

3. Device according to claim 1 or claim 2, **characterised in that** the connecting means comprise exactly two bearing rollers (4, 5).

4. Device according to any one of the preceding claims, **characterised in that** when viewed in the longitudinal direction of the carrier rail (2), a bearing element is positioned in a front and/or rear end section of the longitudinal leg (14).

5. Device according to any one of the preceding claims, **characterised in that** when viewed in the longitudinal direction of the carrier rail (2), a bearing element is positioned in a middle section of the longitudinal leg (14).

6. Device according to any one of the preceding claims, **characterised in that** the connecting means comprise two profile elements (12, 13) which are spaced apart from one another, which are adjusted for releasable arrangement on the profile arrangement.

7. Device according to any one of the preceding claims, **characterised in that** a spacing between two profile elements (12, 13) and a height dimension of the bearing elements are matched to one another.

8. Device according to any one of the preceding claims, **characterised in that** the bearing elements and the two profile elements (12, 13) which are spaced apart are matched in such a manner that the bearing elements are movable in either a sliding manner or rolling manner in longitudinal extension of the profile elements (12, 13) relative to the profile elements (12, 13).

9. Device according to any one of the preceding claims, **characterised in that** the connecting means comprise two profile elements (12, 13) which are spaced apart and provide a run-in section (12a, 13a) for facilitating the end insertion of the bearing elements attached to the carrier rail (2) between the profile elements (12, 13).

10. Device according to any one of the preceding claims, **characterised in that** the connecting means comprise a stop arrangement for a mechanical stop of a bearing element on one of the profile elements (12, 13).

11. Kitchen furnishing having a usable volume which is delimited by opposite side wall sections, comprising a device (1) according to any one of the preceding claims.

## Revendications

1. Dispositif (1) pour guider le mouvement d'un élément à pousser qui peut être disposé au moyen du dispositif (1) sur une partie de paroi latérale, le dispositif (1) comprenant un rail support (2) pouvant être associé à la partie de paroi latérale et un rail coulissant (3) qui peut être relié à l'élément à pousser et qui est mobile par rapport au rail support (2), et le rail support (2) étant muni d'une branche longitudinale (14) s'étendant dans la direction longitudinale du dispositif (1), le dispositif (1) étant muni de moyens de liaison pour la fixation du dispositif (1) sur un ensemble profilé de la partie de paroi latérale, les moyens de liaison comprenant des moyens de support pour le montage avec enserrement par l'arrière sur l'ensemble profilé, et les moyens de support étant présents sur un côté extérieur (14a) de la branche longitudinale (14) orienté, à l'état monté, vers la partie de paroi latérale, les moyens de liaison comprenant un élément de support reçu sur la branche longitudinale (14) de sorte à pouvoir tourner, **caractérisé en ce que** les moyens de liaison comprennent au moins deux éléments de support et deux éléments profilés (12, 13) espacés l'un de l'autre et adaptés aux éléments de support, entre lesquels peuvent être insérés les éléments de support.

2. Dispositif selon la revendication 1, **caractérisé en ce que** les moyens de liaison sont munis d'éléments de support espacés les uns des autres dans la direction longitudinale du dispositif (1), lesquels peuvent être insérés entre des parties profilées (10, 11) opposées de l'ensemble profilé en vue de fixer le dispositif (1) sur l'ensemble profilé.

3. Dispositif selon la revendication 1 ou 2, **caractérisé en ce que** les moyens de liaison comprennent exactement deux rouleaux support (4, 5).

4. Dispositif selon l'une des revendications précédentes, **caractérisé en ce qu'**un élément de support est positionné dans une zone d'extrémité avant et/ou arrière, considérée dans la direction longitudinale du rail support (2), de la branche longitudinale (14).

5. Dispositif selon l'une des revendications précédentes, **caractérisé en ce qu'**un élément de support est positionné dans une zone centrale, considérée dans la direction longitudinale du rail support (2), de la branche longitudinale (14).

6. Dispositif selon l'une des revendications précédentes, **caractérisé en ce que** les moyens de liaison sont munis de deux éléments profilés (12, 13) espacés et adaptés pour une installation amovible sur l'ensemble profilé.

7. Dispositif selon l'une des revendications précédentes, **caractérisé en ce qu'**un espace entre deux éléments profilés (12, 13) et une hauteur des éléments de support sont adaptés l'un à l'autre.

8. Dispositif selon l'une des revendications précédentes, **caractérisé en ce que** les éléments de support et les deux éléments profilés (12, 13) espacés sont adaptés de telle manière que les éléments de support peuvent être déplacés dans la direction longitudinale des éléments profilés (12, 13) par rapport aux éléments profilés (12, 13) en glissant et/ou en roulant.

9. Dispositif selon l'une des revendications précédentes, **caractérisé en ce que** les moyens de liaison sont munis de deux éléments profilés (12, 13) espacés qui fournissent une zone d'entrée (12a, 13a) pour une introduction frontale facilitée des éléments palier fixés sur le rail support (2) entre les éléments profilés (12, 13).

10. Dispositif selon l'une des revendications précédentes, **caractérisé en ce que** les moyens de liaison sont munis d'un ensemble de butée pour une butée mécanique d'un élément de support sur un des éléments profilés (12, 13).

11. Mobilier de cuisine comprenant un volume utile qui est délimité par des parties opposées de paroi latérale, comprenant un dispositif (1) selon l'une des revendications précédentes.
